(19) Europäisches Patentamt
European Patent Office
Office européen des brevets

(11) Publication number: **0 546 310 A2**

(12) **EUROPEAN PATENT APPLICATION**

(21) Application number: **92118717.5**

(51) Int. Cl.5: **C08G 65/32**, C08K 5/57

(22) Date of filing: **02.11.92**

(30) Priority: **01.11.91 JP 288079/91**

(43) Date of publication of application:
**16.06.93 Bulletin 93/24**

(84) Designated Contracting States:
**BE CH DE ES FR GB IT LI NL SE**

(71) Applicant: **KANEGAFUCHI KAGAKU KOGYO KABUSHIKI KAISHA**
**2-4 Nakanoshima 3-chome**
**Kita-ku Osaka-shi Osaka 530(JP)**

(72) Inventor: **Fujita, Masayuki**
**2-63, Okihama-machi, Takasago-cho**
**Takasago-shi, Hyogo(JP)**
Inventor: **Honma, Michihide**
**2-63. Okihama-machi, Takasago-cho**
**Takasago-shi, Hyogo(JP)**
Inventor: **Wakabayashi, Hiroshi**
**8-B-102, Maikodai 2-chome, Tarumi-ku**
**Kobe-shi, Hyogo(JP)**

(74) Representative: **Vossius & Partner**
**Siebertstrasse 4 P.O. Box 86 07 67**
**W-8000 München 80 (DE)**

(54) **Curable polyether composition.**

(57) A novel curable composition is provided, including:
(A) an oxypropylene polymer containing a main polymer chain having a repeating unit represented by the general formula (1):

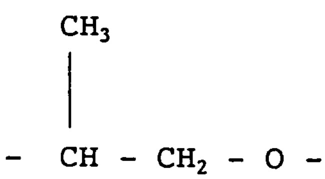

(1)

and at least one reactive silicon group containing a silicon atom to which a hydroxyl group or hydrolyzable group is bonded, said oxypropylene polymer having Mw/Mn of 1.6 or less and a number-average molecular weight of 6,000 or more; and
(B) a compound represented by the general formula:

$Q_2Sn(OZ)_2$ or 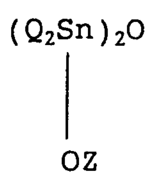

(5) (6)

wherein Q represents a $C_{1-20}$ monovalent hydrocarbon group; and Z represents a $C_{1-20}$ monovalent

EP 0 546 310 A2

hydrocarbon group or an organic group internally containing a functional group capable of forming a coordinate bond to Sn as a curing catalyst in an amount of 0.01 to 10 parts by weight based on 100 parts by weight of said oxypropylene polymer.

The present invention relates to a novel curable composition comprising an oxypropylene polymer containing a silicon atom-containing group containing a silicon atom to which a hydroxyl group or hydrolyzable group is bonded and capable of forming a siloxane bond (hereinafter referred to as "reactive silicon group"), and a specific organic tin compound.

A room temperature curing composition comprising an oxypropylene polymer containing a reactive silicon group, and a specific organic tin compound has been heretofore known as disclosed in U.S. Patent 4,837,401.

It has been recently reported that an oxypropylene polymer having a narrow molecular weight distribution can be obtained. The present inventors have now found that a curable composition comprising as a polymer constituting a main chain a reactive silicon-containing oxypropylene polymer having a narrow molecular weight distribution blended with a specific organic tin compound exhibits a remarkably improved curing rate as compared with those comprising a reactive silicon-containing oxypropylene polymer having a wide molecular weight distribution.

The curable composition according to the present invention comprises:

(A) an oxypropylene polymer containing a main polymer chain having a repeating unit represented by the general formula (1):

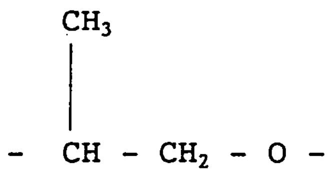

(1)

and at least one reactive silicon group containing a silicon atom to which a hydroxyl group or hydrolyzable group is bonded, said oxypropylene polymer having Mw/Mn of 1.6 or less and a number-average molecular weight of 6,000 or more; and

(B) a compound represented by the general formula:

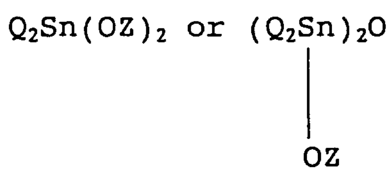

(2)

(5) (6)

wherein Q represents a $C_{1-20}$ monovalent hydrocarbon group; and Z represents a $C_{1-20}$ monovalent hydrocarbon group or an organic group internally containing a functional group capable of forming a coordinate bond to Sn (hereinafter simply referred to as "curing catalyst") as a curing catalyst in an amount of 0.01 to 10 parts by weight based on 100 parts by weight of the oxypropylene polymer.

The reactive silicon group as used herein is not specifically limited. A typical example of the reactive silicon group is one represented by the following general formula (3):

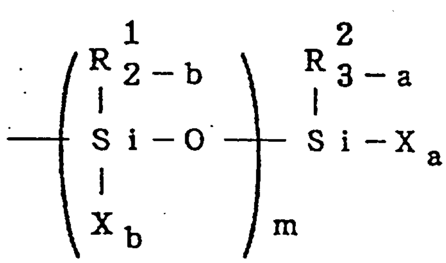

(3)

wherein $R^1$ and $R^2$ each represents a $C_{1-20}$ alkyl group, $C_{6-20}$ aryl group, $C_{7-20}$ aralkyl group or triorganosiloxy group represented by $(R')_3SiO$- in which R' represents a $C_{1-20}$ monovalent hydrocarbon group, with the proviso that when two or more of $R^1$ or $R^2$ exist, they may be the same or different and that

the three (R')'s may be the same or different; X represents a hydroxyl group or hydrolyzable group, with the proviso that when two or more of X exist, they may be the same or different; a represents an integer 0 to 3; b represents an integer 0 to 2, with the proviso that the plurality of b's in

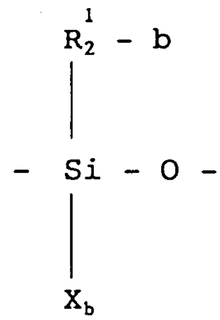

in a number of m may be the same or different; and m represents an integer 0 to 19, with the proviso that m satisfies the relationship $a + \Sigma b \geqq 1$.

The hydrolyzable group represented by X is not specifically limited and may be any known hydrolyzable group. Specific preferred examples of such a hydrolyzable group include a hydrogen atom, a halogen atom, an alkoxy group, an acyloxy group, a ketoxymate group, an amino group, an amide group, an acid amide group, an aminoxy group, a mercapto group, and an alkenyloxy group. Preferred among these hydrolyzable groups are a hydrogen atom, an alkoxy group, an acyloxy group, a ketoxymate group, an amino group, an amide group, an aminooxy group, a mercapto group, and an alkenyloxy group. Particularly preferred among these hydrolyzable groups is an alkoxy group such as a methoxy group because it exhibits a mild hydrolyzability that gives a good handleability.

One to three of such a hydrolyzable group or hydroxyl group may be bonded to one silicon atom, and $(a + \Sigma b)$ is preferably from 1 to 5. When two or more of such a hydrolyzable group or hydroxyl group exist in the reactive silicon group, they may be the same or different.

The reactive silicon group may contain one or more silicon atoms. In the case of a reactive silicon group containing silicon atoms bonded thereto by a siloxane bond, there may be about 20 silicon atoms contained therein.

A reactive silicon group represented by the following general formula (4) is preferably used from the standpoint of availability.

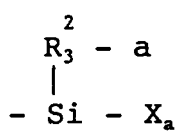
(4)

wherein $R^2$, X, and a are as defined above.

Specific examples of $R^1$ and $R^2$ in the above general formula (3) include an alkyl group such as a methyl group and an ethyl group, a cycloalkyl group such as a cyclohexyl group, an aryl group such as a phenyl group, an aralkyl group such as a benzyl group, and a triorganosiloxy group represented by $(R')_3SiO-$ wherein R' is a methyl group or a phenyl group. $R^1$, $R^2$ and R' each is particularly preferably a methyl group.

At least one, preferably 1.1 to 5 of such a reactive silicon group is preferably contained in one molecule of the oxypropylene polymer. If less than one of such a reactive silicon group is contained in one molecule of the oxypropylene polymer, the polymer leaves much to be desired with respect to curability, making it difficult to exhibit an excellent rubber elastic behavior.

The reactive silicon group may exist at the end of or inside the oxypropylene polymer molecular chain. If the reactive silicon group exists at the end of the oxypropylene polymer molecular chain, the effective amount of network chain in the oxypropylene polymer component contained in the finally produced cured material is increased, making it easy to obtain a cured gum material having a high strength, a high elongation and a low elasticity.

The oxypropylene polymer constituting the main polymer chain in the polymer of the present invention contains a repeating unit represented by the following general formula (1):

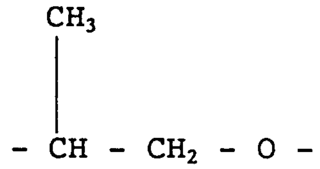

(1)

The oxypropylene polymer may be straight or branched-chain or may be a mixture thereof. The polymer of the present invention may contain other monomer units, but the monomer unit represented by the above general formula (1) is preferably contained in the polymer in an amount of 50 % by weight or more, preferably 80 % by weight or more.

The oxypropylene polymer containing a reactive silicon group as the component (A) of the present invention is preferably obtained by introducing a reactive silicon group into an oxypropylene polymer containing a functional group.

It is extremely difficult to employ an ordinary oxypropylene polymerization process (anionic polymerization process using a caustic alkali) or chain extension reaction using this polymer as a starting material to obtain an oxypropylene polymer having a high molecular weight and a narrow molecular weight distribution and containing a functional group. A specific polymerization process as disclosed in JP-A-61-197631, 61-215622, 61-215623, and 61-218632 (the term "JP-A" as used herein means an "unexamined published Japanese patent application"), and JP-B-46-27250, and 59-15336 (the term "JP-B" as used herein means an "examined Japanese patent publication") can be employed to obtain such an oxypropylene polymer. An oxypropylene polymer into which a reactive silicon group has been introduced tends to exhibit a wider molecular weight distribution than before the introduction of the reactive silicon group. Therefore, the molecular weight distribution in the polymer is as narrow as possible before the introduction of the reactive silicon group.

The introduction of the reactive silicon group may be accomplished by any known method. In particular, the following methods can be used:

(1) An oxypropylene polymer containing a functional group such as hydroxyl group at the end thereof is reacted with an organic compound containing an active group reactive to the functional group and an unsaturated group. The reaction product thus obtained is then acted on by a hydrosilane containing a hydrolyzable group so that it is hydrosilylated.

(2) An oxypropylene polymer containing a functional group such as hydroxyl group, epoxy group and isocyanate group (hereinafter referred to as "Y functional group") is reacted with a compound containing a functional group reactive to Y functional group (hereinafter referred to as "Y' functional group") and a reactive silicon group.

Specific examples of silicon compound containing Y' functional group include amino group-containing silanes such as $\gamma$-(2-aminoethyl)aminopropyl trimethoxysilane, $\gamma$-(2-aminoethyl)aminopropylmethyl dimethoxysilane and $\gamma$-aminopropyl triethoxysilane; mercapto group-containing silanes such as $\gamma$-mercaptopropyl trimethoxysilane and $\gamma$-mercaptopropylmethyl dimethoxysilane; epoxysilanes such as $\gamma$-glycidoxypropyl trimethoxysilane and $\beta$-(3,4-epoxycyclohexyl)ethyl trimethoxysilane; vinyl type unsaturated group-containing silanes such as vinyl triethoxysilane, $\gamma$-methacryloyloxy propyl trimethoxysilane and $\gamma$-acryloyloxypropyl methyl dimethoxysilane; chlorine atom-containing silanes such as $\gamma$-chloropropyltrimethoxysilane; isocyanate-containing silanes such as $\gamma$-isocyanate propyl triethoxysilane and $\gamma$-isocyanate propylmethyl dimethoxysilane; and hydrosilanes such as methyldimethoxysilane, trimethoxysilane and methyldiethoxysilane. However, the present invention is not limited thereto.

Among the above mentioned methods, the method (1) or (2) wherein a polymer containing a hydroxyl group at the end thereof is reacted with a compound containing an isocyanate group and a reactive silicon group is preferably used.

As the reactive silicon-containing oxypropylene polymer (A) there can be effectively used one having a number-average molecular weight (Mn) of 6,000 or more, preferably 6,000 to 60,000. If the number-average molecular weight of the polymer (A) to be used is less than 6,000, the effect of improving the curing rate is small. On the contrary, if it exceeds 60,000, practicability problems in viscosity can easily arise.

Further, the oxypropylene polymer has a weight-average molecular weight/number-average molecular weight ratio (Mw/Mn) of 1.6 or less and thus has an extremely narrow molecular weight distribution (great monodispersibility). Mw/Mn is preferably 1.5 or less, more preferably 1.4 or less. The molecular weight distribution can be determined by various methods. In general, the gel permeation chromatography (GPC) is employed. Thus, since the composition according to the present invention has a narrow molecular weight distribution despite its high number-average molecular weight, it exhibits a low viscosity that gives a good

handlability before curing, exhibits an excellent curability in curing, and exhibits an excellent rubber elastic behavior after curing.

The hydrolyzable silicon group in the organic polymer (A) undergoes hydrolyzation in the presence of water to cause the polymer (A) to undergo a condensation reaction that leads to cross-linked cure. The curing catalyst (B) accelerates the curing of the polymer (A) extremely remarkably. As the curing catalyst (B) there can be used a compound having the following structural formula (5) or (6):

$Q_2Sn(OZ)_2$ or 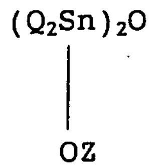

(5) (6)

wherein Q and Z are as defined above. Specific examples of such a compound will be given below:

$(C_4H_9)_2Sn(OCH_3)_2$、

$(C_4H_9)_2Sn(OC_4H_9)_2$、 $(C_4H_9)_2Sn(OC_8H_{17})$

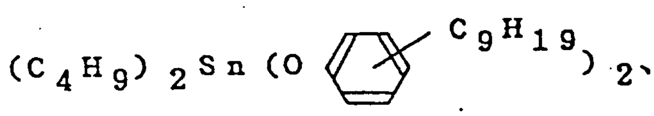

$(C_4H_9)_2Sn(OC_{12}H_{25})_2$、

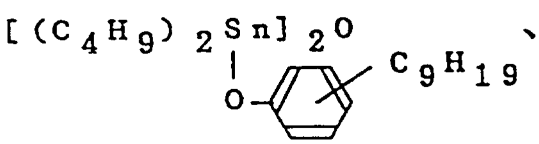

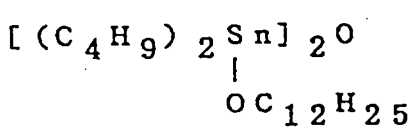 、 $(C_8H_{17})_2Sn(OC_4H_9)_2$、

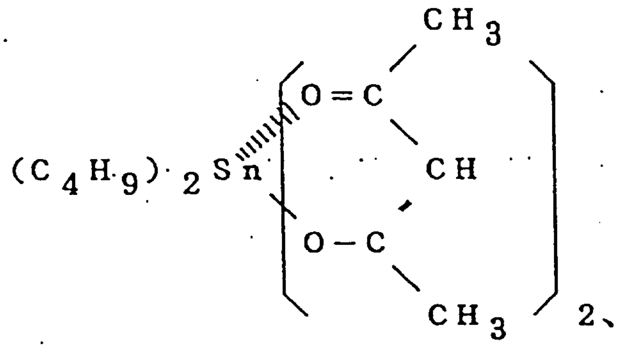

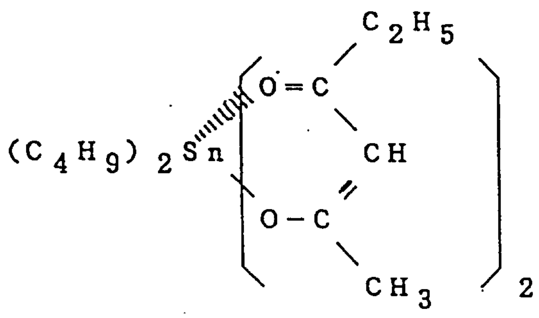、

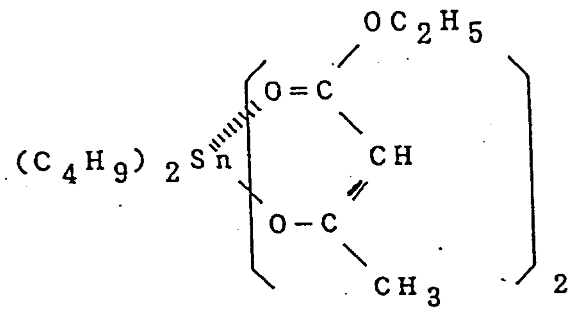、

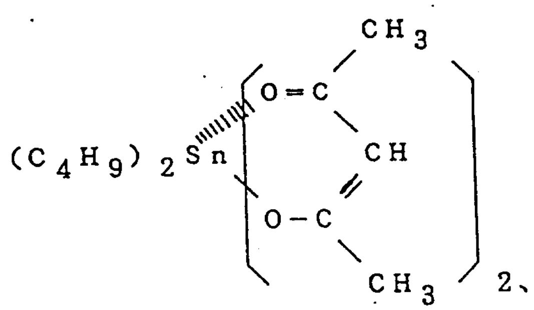、

$(C_4H_9)_2Sn(OCH_2CH_2CH_2NH_2)_2$、

$(C_4H_9)_2Sn(OCH_2CH_2NH_2)_2$、

$(C_4H_9)_2Sn[OCH_2CH_2CH_2N(CH_3)_2]_2$、

$(C_4H_9)_2Sn(OCH_2CH_2CH_2SH)_2$

The present invention is not limited to these compounds.

These curing catalysts (B) may be used singly or in combination. The amount of these curing catalysts (B) to be used is in the range of 0.01 to 10 parts by weight, preferably 0.1 to 5 parts by weight based on 100 parts by weight of reactive silicon group-containing oxypropylene polymer as the component (A). If the amount of the compound (A) falls below 0.01 parts by weight, the practically allowable level of curing rate cannot be obtained. On the contrary, if the amount exceeds 10 parts by weight, problems such as high cost will arise.

As compared with organic tin compounds which have heretofore been used, the curing catalyst (B) to be used in the present invention remarkably accelerates the rapid-curing activity. The curing catalyst (B) to be used in the present invention does not suffer from coloring as in the case where an alkyl titanate compound is used as a catalyst. Further, the curing catalyst (B) is excellent in productivity as well as external appearance.

The curable composition of the present invention containing the components (A) and (B) exhibits a remarkably high curing rate. When allowed to stand in the atmosphere at room temperature for several minutes to one hour, the curable composition begins to be cured from its surface and then becomes tack-free. When the curable composition is further allowed to stand under the same conditions for several days, the internal curing proceeds to obtain a rigid rubber elastic material. The cured composition further exhibits an excellent heat resistance and acid resistance.

The reactive silicon group-containing oxypropylene polymer can undergo modification when mixed with various fillers. Examples of such fillers include reinforcing fillers such as fumed silica, precipitated silica, silicic anhydrate, hydrous silicic acid and carbon black; fillers such as calcium carbonate, magnesium carbonate, diatomaceous earth, calcined clay, clay, talc, titanium oxide, bentonite, organic bentonite, ferric oxide, zinc oxide, active zinc white, hydrogenated castor oil and porous micro silicon powder; and fibrous fillers such as asbestos, glass fiber and filament.

If it is desired to obtain a curable composition having a high strength with these fillers, a filler selected from among fumed silica, precipitated silica, silicic anhydride, hydrous silicic acid, carbon black, finely divided surface-treated calcium carbonate, calcined clay, clay and active zinc white can be used in an amount of 1 to 100 parts by weight based on 100 parts by weight of the reactive silicon group-containing oxypropylene polymer to provide excellent results. If it is desired to obtain a curable composition having a low strength and a high extension, a filler selected from among titanium oxide, calcium carbonate, magnesium carbonate, ferric oxide, zinc oxide and porous micro silicon powder can be used in an amount of 5 to 200 parts by weight based on 100 parts by weight of the reactive silicon group-containing oxypropylene polymer to provide excellent results. It goes without saying that these fillers can be used singly or in combination.

If the curable composition of the present invention comprises a plasticizer in combination with the filler, the resulting cured material can exhibit a higher elongation or a larger amount of fillers can be incorporated in the system. Examples of such a plasticizer include ester phthalates such as dioctyl phthalate, dibutyl phthalate and butyl benzyl phthalate; aliphatic dibasic esters such as dioctyl adipate, isodceyl (or isododecyl) succinate and dibutyl sebacate; glycol esters such as diethylene glycol dibenzoate and pentaerythritol; aliphatic esters such as butyl oleate and methyl acetylricinoleate; ester phosphates such as tricresyl phosphate, trioctyl phosphate and octyldiphenyl phosphate; epoxy plasticizers such as epoxidized soybean oil, epoxidized linseed oil and benzyl epoxystearate; polyester plasticizers such as polyester made of dibasic acid and divalent alcohol; polyethers such as polypropylene glycol and derivatives thereof; polystyrenes such as poly-$\alpha$-methylstyrene and polystyrene; and plasticizers such as polybutadiene, butadiene-acrylonitrile copolymer, polychloroprene, polyisoprene, polybutene and chlorinated paraffins. These plasticizers can be used singly or in admixture. These plasticizers can be used in an amount of 100 parts by weight or less based on 100 parts by weight of the reactive silicon group-containing oxypropylene polymer to provide excellent results.

The process for the preparation of the curable composition of the present invention is not specifically limited, but ordinary methods can be used. For example, the above mentioned components may be blended, and then kneaded at normal temperature or elevated temperature by means of a mixer, roll or kneader. Alternatively, these components may be dissolved in admixture in a small amount of a proper solvent. These components may be properly combined to prepare a one-pack or two-pack compound.

When exposed to the atmosphere, the curable composition of the present invention is acted upon by water to form a three-dimensional network that expedites curing to a solid material having rubber elasticity.

When the curable composition of the present invention is used, other curing catalysts (e.g., laurylamine, lead octylate), and various additives such as adhesion improver, physical property adjustor, storage stability improver, ultraviolet absorbent, metal inactivator, ozone deterioration inhibitor, light stabilizer, amine radical chain inhibitor, phosphorus peroxide decomposer, lubricant, pigment and foaming agent can be properly incorporated therein as necessary.

The curable composition of the present invention can be used as an adhesive and sealant as well as a molding agent, insulation, foaming material, coating and spraying material.

In accordance with the present invention, a curable composition having an extremely high curing rate can be obtained.

The present invention will be further described in the following examples, but the present invention should not be construed as being limited thereto.

SYNTHESIS EXAMPLE 1

401 g (0.081 equivalent) of a polyoxypropylene triol (Mw/Mn = 1.38; viscosity: 89 poise) having a molecular weight of 15,000 was charged into a 1.5-ℓ pressure glass reaction vessel. The air in the vessel was replaced by an atmosphere of nitrogen.

19.1 g (0.099 equivalent) of a 28 % methanol solution of sodium methoxide was added dropwise to the reaction system through a dropping funnel at a temperature of 137 °C where the reaction system was allowed to undergo reaction for 5 hours. The reaction system was then deaerated under reduced pressure. The reaction system was again put in an atmosphere of nitrogen. The reaction system was then allowed to undergo reaction with 9.0 g (0.118 equivalent) of allyl chloride being added dropwise thereto for 1.5 hours. The reaction system was allylated with 5.6 g (0.029 equivalent) of a 28% methanol solution of sodium methoxide and 2.7 g (0.035 equivalent) of allyl chloride.

The reaction product was dissolved in hexane, and then adsorbed by aluminum silicate. Hexane was removed from the material under reduced pressure to obtain 311 g of a yellow transparent polymer (viscosity: 68 poise).

270 g (0.065 equivalent) of the polymer thus obtained was charged into a pressure glass reaction vessel which was put in an atmosphere of nitrogen. To the material was then added 0.075 mℓ of a solution of chloroplatinic acid catalyst (solution of 25 g of $H_2PtCl_6 \cdot 6H_2O$ in 500 g of isopropyl alcohol). The reaction mixture was stirred for 30 minutes. The reaction system was then allowed to undergo reaction with 6.24 g (0.059 equivalent) of dimethoxymethyl silane being added dropwise thereto through a dropping funnel at a temperature of 90 °C for 4 hours. The reaction system was then deaerated to obtain 260 g of a yellow transparent polymer.

SYNTHESIS EXAMPLE 2

220 g (0.0447 equivalent) of a polyoxypropylene triol (Mw/Mn = 1.38; viscosity: 89 poise) having a number-average molecular weight of 15,000 and 0.02 g of dibutyltin dilaurate were charged into a flask with an agitator. 8.45 g (0.0447) of γ-isocyanate propylmethyl dimethoxysilane was added dropwise to the material at room temperature in an atmosphere of nitrogen. After the completion of dropwise addition, the reaction system was then allowed to undergo reaction at a temperature of 75 °C for 1.5 hours. The reaction system was measured for infrared spectrum to confirm the disappearance of absorption of NCO in the vicinity of 2,280 $cm^{-1}$ and the generation of absorption of C=O in the vicinity of 1,730 $cm^{-1}$. The reaction was then terminated. 213 g of a colorless transparent polymer was obtained.

COMPARATIVE SYNTHESIS EXAMPLE 1

420 g of a polyoxypropylene glycol having a number-average molecular weight of 3,000 and 80 g of a polyoxypropylene triol having a number-average molecular weight of 3,000 were charged into a pressure glass reaction vessel whose atmosphere had been replaced by nitrogen. 40 g of sodium hydroxide was added to the reaction system which was then allowed to undergo reaction at a temperature of 60 °C for 13 hours. The reaction system was then reacted with 19 g of bromochloromethane at a temperature of 60 °C for 10 hours (The polymer thus obtained exhibited Mw/Mn of 2.1 and a viscosity of 385 poise).

15 g of allyl chloride was added to the reaction system which was then allowed to undergo reaction for 36 hours. After the completion of reaction, volatile substances were removed under reduced pressure.

The contents of the reaction vessel were taken out into a beaker in which they were then dissolved in hexane. The solution was then adsorbed by aluminum silicate. Hexane was then removed under reduced pressure.

500 g of the polymer thus obtained was then charged into a reaction vessel whose atmosphere had been replaced by nitrogen. To the material was added 0.03 g of a solution of chloroplatinic acid catalyst (solution of 25 g of $H_2PtCl_6 \cdot 6H_2O$ in 500 g of isopropyl alcohol). 12 g of dimethoxymethylsilane was then added to the reaction system. The reaction system was then allowed to undergo reaction at a temperature of 80 °C for 4 hours. After the completion of reaction, volatile substances were removed under reduced pressure to obtain 550 g of a yellow transparent polymer.

The polymers obtained in Synthesis Examples 1 and 2 and Comparative Synthesis Example 1 were then measured for viscosity by means of a B type viscometer (Type BM rotor No. 4; 12 rpm) at a temperature of 23 °C. These polymers were analyzed for number-average molecular weight (Mn) and molecular weight distribution (Mw/Mn) by GPC. GPC was carried out using a column filled with a polystyrene gel (available from Toso K.K.) with tetrahydrofuran as eluting solution at an oven temperature of

40 °C. The results are set forth in Table 1.

Table 1

| Polymer | Viscosity (poise) | Number-average molecular weight(Mn) | Molecular weight distribution(Mw/Mn) |
|---|---|---|---|
| Synthesis Example 1 | 88 | $1.8 \times 10^4$ | 1.5 |
| Synthesis Example 2 | 150 | $1.7 \times 10^4$ | 1.4 |
| Comparative Synthesis Example 1 | 380 | $1.8 \times 10^4$ | 2.3 |

EXAMPLES 1 - 10 & COMPARATIVE EXAMPLES 1 - 4

To 100 parts by weight of each of the polymers obtained in Synthesis Examples 1 and 2 and Comparative Synthesis Example 1 were added 150 parts by weight of calcium carbonate (CCR produced by Shiraishi Kogyo K.K.), 60 parts by weight of dioctyl phthalate as a plasticizer and 30 parts by weight of titanium oxide. The mixture was kneaded by means of a three-roll paint mill. 1.5 parts by weight or 3 parts by weight of dibutyltin bisacetylatonate, dibutyltin dimethoxide or dibutyltin bisnonylphenoxide were added to the material as set forth in Table 2. The mixture was then uniformly kneaded to obtain a curable composition.

In order to examine the curing rate of the composition thus obtained, the composition was measured for tack-free time in accordance with JIS A 5758. The results are set forth in Table 2.

COMPARATIVE EXAMPLES 5 - 8

Curable compositions were prepared in the same manner as in Example 1 using a polymer obtained in Synthesis Example 1 except that tin dioctylate or dibutyltin dilaurate was used instead of the curing catalyst (B).

The compositions thus obtained were measured for tack-free time in the same manner as mentioned above. The results are set forth in Table 2.

Table 2

| Example No. | Kind of polymer | Curing catalyst Kind | parts | Tack-free time (min.) |
|---|---|---|---|---|
| Example 1 | Synthesis Example 1 | Dibutyltin bisacetyl-acetonate *1 | 1.5 | 50 |
| Example 2 | | | 3 | 20 |
| Example 3 | Synthesis Example 1 | Dibutyltin dimethoxide | 1.5 | 40 |
| Example 4 | | | 3 | 15 |
| Example 5 | Synthesis Example 1 | Dibutyltin bisnonyl-phenoxide *3 | 1.5 | 60 |
| Example 6 | | | 3 | 30 |
| Example 7 | Synthesis Example 2 | Dibutyltin bisacetyl-acetonate | 1.5 | 45 |
| Example 8 | | | 3 | 20 |
| Example 9 | Synthesis Example 2 | Dibutyltin bisnonyl-phenoxide | 1.5 | 55 |
| Example 10 | | | 3 | 25 |

| | | | | |
|---|---|---|---|---|
| Comparative Example 1 | Comparative Synthesis Example 1 | Dibutyltin bisacetylacetonate | 1.5 | 150 |
| Comparative Example 2 | | | 3 | 75 |
| Comparative Example 3 | Comparative Synthesis Example 1 | Dibutyltin bisnonylphenoxide | 1.5 | 200 |
| Comparative Example 4 | | | 3 | 90 |
| Comparative Example 5 | Synthesis Example 1 | Tin dioctylate *4 | 1.5 | 720 or more |
| Comparative Example 6 | | | 3 | 720 or more |
| Comparative Example 7 | Synthesis Example 1 | Dibutyltin dilaurate *5 | 1.5 | 480 |
| Comparative Example 8 | | | 3 | 210 |

*1

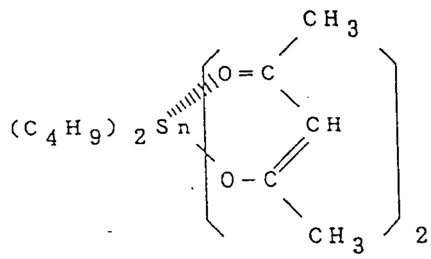

*2 $(C_4H_9)_2Sn(OCH_3)_2$

*3

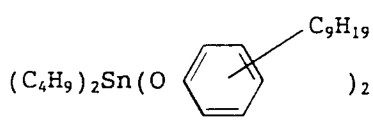

*4 $Sn(O\underset{\underset{O}{\|}}{C}C_7H_{15})_2$

*5 $(C_4H_9)_2Sn(O\underset{\underset{O}{\|}}{C}C_{11}H_{23})_2$

Table 2 shows that the use of a polymer having a narrow molecular weight distribution gives drastic improvements in the curing rate as compared with the use of a polymer having a wide molecular weight distribution.

The curing catalyst (B) to be used in the present invention remarkably accelerates the curing activity of the polymer (A) as compared with organic tin compounds which have been conventionally used.

While the invention has been described in detail and with reference to specific embodiments thereof, it will be apparent to one skilled in the art that various changes and modifications can be made therein without departing from the spirit and scope thereof.

## Claims

**1.** A curable composition, comprising:

(A) an oxypropylene polymer containing a main polymer chain having a repeating unit represented by the general formula (1):

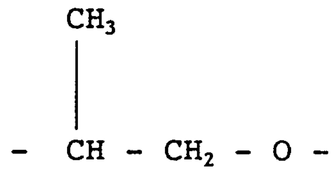

(1)

and at least one reactive silicon group containing a silicon atom to which a hydroxyl group or hydrolyzable group is bonded, said oxypropylene polymer having Mw/Mn of 1.6 or less and a number-average molecular weight of 6,000 or more; and

(B) a compound represented by the general formula:

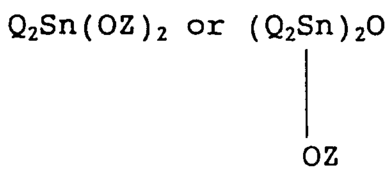

(5) (6)

wherein Q represents a $C_{1-20}$ monovalent hydrocarbon group; and Z represents a $C_{1-20}$ monovalent hydrocarbon group or an organic group internally containing a functional group capable of forming a coordinate bond to Sn as a curing catalyst in an amount of 0.01 to 10 parts by weight based on 100 parts by weight of said oxypropylene polymer.

**2.** A curable composition according to Claim 1, wherein said silicon atom-containing group is represented by the following general formula (3):

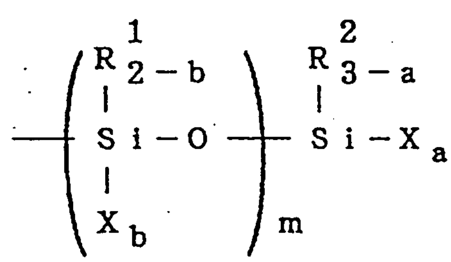

(3)

wherein $R^1$ and $R^2$ each represents a $C_{1-20}$ alkyl group, $C_{6-20}$ aryl group, $C_{7-20}$ aralkyl group or triorganosiloxy group represented by $(R')_3SiO$- in which R' represents a $C_{1-20}$ monovalent hydrocarbon group, with the proviso that when two or more of $R^1$ or $R^2$ exist, they may be the same or different and that the three (R')'s may be the same or different; X represents a hydroxyl group or hydrolyzable group, with the proviso that when two or more of X exist, they may be the same or different; a represents an integer 0 to 3; b represents an integer 0 to 2, with the proviso that the plurality of b's in

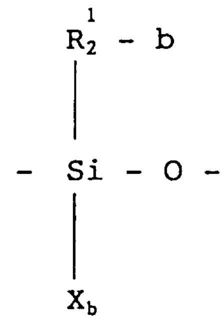

in a number of m may be the same or different; and m represents an integer 0 to 19, with the proviso that m satisfies the relationship a + $\Sigma b \geqq 1$.

**3.** A curable composition according to Claim 2, wherein said silicon atom-containing group is represented by the following general formula (4):

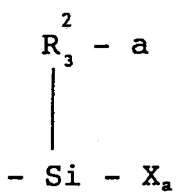

(4)

wherein $R^2$, X, and a are as defined above.

**4.** A curable composition according to any of claims 1 to 3 wherein the hydrolyzable group in said silicon atom-containing group is methoxy group.

**5.** A curable composition according to Claim 4, wherein said silicon atom-containing group is $-Si(CH_3)-(OCH_3)_2$.

**6.** A curable composition according to any of claims 1 to 5 wherein the polymer in the component (A) has Mw/Mn of 1.5 or less.

**7.** A curable composition according to any of claims 1 to 6 wherein the polymer in the component (A) has a number-average molecular weight of 6,000 to 60,000.

**8.** A curable composition according to any of claims 1 to 7 wherein said curing catalyst as the component (B) is represented by the following general formula (7):

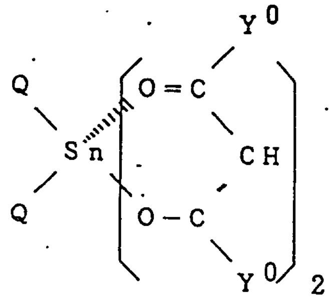

(7)

wherein Q represents a $C_{1-20}$ monovalent hydrocarbon group; and $Y^0$ represents a group selected from the group consisting of $C_{1-8}$ hydrocarbon group, halogenated hydrocarbon group, cyanoalkyl group, alkoxy group, halogenated alkoxy group, cyanoalkoxy group and amino group and may be the

same or different.